# EUROPÄISCHE PATENTSCHRIFT

(11) **EP 2 462 058 B1**
(45) Veröffentlichungstag und Bekanntmachung des Hinweises auf die Patenterteilung: **01.01.2014**
(21) Anmeldenummer: 10739921.4
(22) Anmeldetag: 02.08.2010
(51) Int. Cl.: C01B 33/107

(54) **VERFAHREN UND ANLAGE ZUR HERSTELLUNG VON TRICHLORSILAN**
PROCESS AND SYSTEM FOR PRODUCING TRICHLOROSILANE
PROCÉDÉ ET INSTALLATION DE PRODUCTION DE TRICHLOROSILANE

(30) Priorität: 04.08.2009 DE 102009037155
(43) Veröffentlichungstag der Anmeldung: 13.06.2012
(73) Patentinhaber: Schmid Silicon Technology GmbH, 72250 Freudenstadt (DE)
(72) Erfinder: PETRIK, Adolf, 72250 Freudenstadt (DE); HAHN, Jochem, 72108 Rottenburg (DE); SCHMID, Christian, 72250 Freudenstadt (DE)
(74) Vertreter: Patentanwälte Ruff, Wilhelm, Beier, Dauster & Partner
(86) Internationale Anmeldenummer: PCT/EP2010/061224
(87) Internationale Veröffentlichungsnummer: WO 2011/015560

(56) Entgegenhaltungen:
- WO-A2-02/48024
- DE-A1- 19 647 162
- DE-A1- 19 654 154

## Beschreibung

Gegenstand der vorliegenden Erfindung ist ein Verfahren zur Herstellung von Trichlorsilan durch vorzugsweise katalytische Umsetzung von Siliziumpartikeln mit Tetrachlorsilan und Wasserstoff in einem Wirbelschichtreaktor sowie eine Anlage, in der ein solches Verfahren betrieben werden kann.

Wie allgemein bekannt ist, ist Trichlorsilan ein wertvolles Zwischenprodukt bei der Herstellung von hochreinem Silizium, wie es für photovoltaische Anwendungen und für die Halbleitertechnik sowie in der Siliziumorganik benötigt wird. So kann beispielsweise metallurgisches Silizium, das häufig noch einen relativ hohen Anteil an Verunreinigungen aufweist, in Trichlorsilan überführt werden, das anschließend mit Wasser zu hochreinem Silizium reduziert wird. Eine derartige Vorgehensweise ist beispielsweise aus der DE 2 919 086 bekannt. Alternativ dazu kann man hochreines Silizium auch durch thermische Zersetzung von Monosilan gewinnen, wie es z. B. in der DE 33 11 650 beschrieben ist. Das dafür benötigte Monosilan lässt sich wiederum insbesondere durch Disproportionierung von Trichlorsilan erhalten.

Für die Synthese von Trichlorsilan kommen insbesondere zwei Reaktionswege in Frage, nämlich zum einen die direkte Umsetzung von metallurgischem Silizium mit Chlorwasserstoff (Hydrochlorierungsvariante) und zum anderen durch Umsetzung von Siliziumtetrachlorid mit metallurgischem Silizium und Wasserstoff (Hydrierungsvariante).

Insbesondere die Hydrierungsvariante ist sehr gebräuchlich, da das dafür benötigte Siliziumtetrachlorid bei der Disproportionierung von Trichlorsilan zu Monosilan ohnehin zwingend als Nebenprodukt (wie in praktisch allen Verfahren zur Herstellung von Polysilizium) anfällt. Die Gesamtausbeute der Synthesekette Si + SiCl₄ + H₂ → SiHCl₃ → SiH₄ + SiCl₄ → Si lässt sich natürlich deutlich erhöhen, indem das bei der Disproportionierung Siliziumtetrachlorid wieder in den Reaktionsweg eingespeist wird.

Die Umsetzung von Siliziumtetrachlorid mit metallurgischem Silizium und Wasserstoff zu Trichlorsilan erfolgt vorzugsweise in Wirbelschichtreaktoren. Ein geeigneter Wirbelschichtreaktor ist beispielsweise aus der DE 196 47 162 A1 oder der DE 196 47 154 A1 bekannt. Ein solcher umfasst in der Regel einen Reaktionsraum, in dessen unterem Bereich eine Verteilerplatte vorgesehen ist, über die Wasserstoffgas und dampfförmiges Silizumtetrachlorid in den Reaktionsraum eingeströmt werden können. Siliziumpartikel können über einen geeigneten Einlass direkt in den Reaktionsraum überführt werden. Durch das nach oben strömende Gas-gemisch aus Wasserstoff und dampfförmigem Siliziumtetrachlorid werden die Siliziumpartikel in einen fluidisierten Zustand überführt und bilden eine Wirbelschicht aus.

Das in der Wirbelschicht entstehende Trichlorsilan (sowie gegebenenfalls andere Reaktionsprodukte) wird in der Regel über einen Auslass im oberen Bereich des Wirbelschichtreaktors aus dem Reaktor abgeführt. Problematisch ist dabei, dass insbesondere bei höheren Gasgeschwindigkeiten stets feine Siliziumpartikel aus der Wirbelschicht mitgerissen werden und zusammen mit dem trichlorsilanhaltigen Produktgasstrom aus dem Reaktor entweichen. Damit dieser Schwund nicht überhand nimmt, sind Wirbelschichtreaktoren zur Synthese von Trichlorsilan in der Regel mit Partikelabscheidern wie Zyklonen versehen. Geeignete Zyklone weisen in der Regel einen Zyklonkörper mit einem Gaseinlass, einem Gasauslass, einem Partikel-Fallauslass und einem Partikelabführrohr auf, dessen oberes Ende mit dem Partikel-Fallauslass des Zyklonkörpers kommuniziert. Gewöhnlich ist ein Staubtrichter zwischen dem Zyklonkörper und dem Partikelabführrohr eingesetzt.

Der Zyklonkörper, der Staubtrichter und das Partikelabführrohr sind in der Regel so im Reaktionsraum des Wirbelschichtreaktors angeordnet, dass sich der Zyklonkörper in einem oberen Teil des Reaktionsraumes, idealerweise über dem im Reaktionsraume gebildeten Wirbelbett, befindet. Ein unterer Teil des Partikelabführrohrs ragt hingegen vorzugsweise bis in die Wirbelschicht hinein.

In einem typischen Betriebszustand eines solchen Wirbelschichtreaktors liegt der mittlere Partikeldurchmesser der in den Reaktionsraum eingebrachten Siliziumpartikel zwischen ca. 100 und 400 µm. Im laufenden Betrieb reduziert sich die Größe der Partikel allerdings, Partikel mit Größen von z.B. weniger als 10 µm treten dann vermehrt auf. Sobald eine bestimmte Partikelgröße (die genaue Größe hängt von Parametern wie der Dichte der Teilchen, den Strömungsgeschwindigkeiten im Wirbelschichtreaktor etc. ab) unterschritten wird, werden Partikel mit einer solchen Größe mit dem trichlorsilanhaltigen Produktgasstrom mitgerissen und treten in den Zyklonkörper des Zyklons ein. Innerhalb des Zyklonkörpers werden alle Siliziumpartikel über einer bestimmten (in der Regel einstellbaren) Partikelgröße vom Produktgasstrom separiert und fallen durch den Partikel-Fallauslass des Zyklonkörpers in das Partikelabführrohr. Durch dieses können sie direkt ins Wirbelbett rücküberführt werden. Feinere Partikel passieren dagegen den Zyklon und müssen in Folgeschritten durch Filter oder sonstige Mittel aus dem trichlorsilanhaltigen Produktgasstrom aufwendig abgetrennt werden.

Aus der WO 02/48024 A2 ist beispielsweise ein Verfahren zur Herstellung von Trichlorsilan durch Umsetzung von Silizium mit Siliziumtetrachlorid und Wasserstoff unter Zugabe von Chlorwasserstoff in einem Wirbelschichtreaktor bekannt, bei dem die Verweilzeit des Chlorwasserstoffs im Reaktor gegenüber der des Siliziumtetrachlorids erniedrigt ist. Die Trichlorsilanausbeute wird dadurch erhöht. Ferner ist beschrieben, dass aus dem Reaktor ausgetragene Siliziumpartikel mittels eines Teilchenabscheiders aus dem Gasstrom abgetrennt und in den Reaktor zurückgeführt werden. Dabei kann unmittelbar vor oder hinter dem Abscheider dem die Siliziumpartikel führenden Gasstrom Chlorwasserstoff zugesetzt werden.

Ein weiteres in derartigen Wirbelschichtreaktoren auftretendes Problem ist, dass das partikulär eingeführte metallurgische Silizium stets einen gewissen Anteil an "inaktiven" oder "inerten" Siliziumpartikeln aufweist, die sich unter den im Wirbelschichtreaktor vorherrschenden Reaktionsbedingungen nicht oder nur sehr langsam mit dem gasförmigen Siliziumtetrachlorid und dem Wasserstoff umsetzen lassen. Dies ist beispielsweise der Fall, wenn ein Siliziumpartikel eine stark oxidierte Oberfläche aufweist, die reaktive Teile des Partikels vor dem Dampf-Gas-Gemisch aus Siliziumtetrachlorid und Wasserstoff abschirmt. Im Dauerbetrieb steigt die Konzentration solcher Partikel in der Wirbelschicht mit der Zeit an und kann die Effizienz des betroffenen Wirbelschichtreaktors erheblich beeinflussen. In der Folge kann es erforderlich sein, in regelmäßigen Zeitabständen den Betrieb des Wirbelschichtreaktors zu unterbrechen und die enthaltene Siliziumcharge zum Teil oder komplett auszutauschen.

Alternativ dazu versuchte man, die Konzentration an inaktiven Partikeln in der Wirbelschicht gering zu halten, indem man über den im Wirbelschichtreaktor angeordneten Partikelabscheider zusammen mit dem Produktgasstrom mehr und auch größere Partikel aus dem Reaktor entweichen lässt, als dies eigentlich erforderlich wäre. Wie bereits erwähnt, lässt sich die Selektivität von Partikelabscheidern wie Zyklonen in der Regel ja variieren.

In der Folge erhöht sich allerdings der Aufwand bei der sich anschließenden Abtrennung der Partikel vom trichlorsilanhaltigen Produktgasstrom deutlich. Weiterhin sinkt natürlich auch die Gesamtausbeute der Umsetzung im Hinblick auf das eingesetzte metallurgische Silizium deutlich.

Der vorliegenden Erfindung lag die Aufgabe zugrunde, eine technische Lösung zur Herstellung von Trichlorsilan bereitzustellen, bei der die obigen Probleme nicht auftreten oder zumindest weitestgehend vermieden werden.

Diese Aufgabe wird gelöst durch das Verfahren zur Herstellung von Trichlorsilan mit den Merkmalen des Anspruchs 1 und die Anlage zur Herstellung von Trichlorsilan mit den Merkmalen des Anspruchs 6. Bevorzugte Ausführungsformen des erfindungsgemäßen Verfahrens sind in den abhängigen Ansprüchen 2 bis 5 angegeben. Bevorzugte Ausführungsformen der erfindungsgemäßen Anlage finden sich in den abhängigen Ansprüchen 7 und 8. Der Wortlaut sämtlicher Ansprüche wird hiermit durch Bezugnahme zum Inhalt dieser Beschreibung gemacht.

Das erfindungsgemäße Verfahren macht wie die meisten der eingangs genannten gattungsgemäßen Verfahren Gebrauch von einem Wirbelschichtreaktor, in dem Siliziumpartikel mit Tetrachlorsilan und Wasserstoff sowie gegebenfalls mit Chlorwasserstoff zu einem trichlorsilanhaltigen Produktgasstrom umgesetzt werden. Die Anwesenheit von Chlorwasserstoff ist in der Regel nicht zwingend erforderlich, kann sich insbesondere beim Anfahren des Reaktors aber positiv auswirken.

Der eingesetzte Wirbelschichtreaktor weist mindestens einen Einlass für das Tetrachlorsilan und den Wasserstoff, insbesondere ein Dampf-Gas-Gemisch aus beiden, sowie gegebenfalls den Chlorwasserstoff auf sowie mindestens einen Einlass für die Siliziumpartikel. Zumindest der mindestens eine Einlass für das Tetrachlorsilan und den Wasserstoff ist dabei vorzugsweise im Bodenbereich des Wirbelschichtreaktors angeordnet, so dass das Tetrachlorsilan und der Wasserstoff innerhalb des Wirbelschichtreaktors nach oben strömen können. In den Reaktor eingebrachte Siliziumpartikel können dann mit dem Tetrachlorsilan und dem Wasserstoff eine Wirbelschicht ausbilden.

In bevorzugten Ausführungsformen des erfindungsgemäßen Verfahrens erfolgt die Umsetzung der Siliziumpartikel mit Tetrachlorsilan und Wasserstoff sowie gegebenenfalls mit Chlorwasserstoff unter katalytischen Bedingungen. Als Katalysatoren kommen insbesondere eisen- und/oder kupferhaltige Katalysatoren in Frage, wobei letztere bevorzugt eingesetzt werden. Als eisenhaltiger Katalysator eignet sich beispielsweise metallisches Eisen, als kupferhaltiger Katalysator metallisches Kupfer (beispielsweise in Form von Kupferpulver oder Kupfer-Flakes) oder eine Kupferverbindung. Der Katalysator kann separat in den Wirbelschichtreaktor eingebracht werden oder vorab mit den Siliziumpartiklen gemischt werden.

Der verwendete Wirbelschichtreaktor weist weiterhin mindestens einen Auslass für den trichlorsilanhaltigen Produktgasstrom auf. Wie eingangs bereits erwähnt, enthält ein solcher trichlorsilanhaltiger Produktgasstrom in aller Regel stets kleine Siliziumpartikel. Deshalb ist auch beim im Rahmen der vorliegenden Erfindung verwendeten Wirbelschichtreaktor dem mindestens einen Auslass für den trichlorsilanhaltigen Produktgasstrom mindestens ein Partikelabscheider vorgeschaltet, der selektiv nur Siliziumpartikel bis hin zu einer bestimmten Maximalpartikelgröße passieren lässt. Diese Maximalpartikelgröße ist in aller Regel einstellbar, abhängig vom verwendeten Partikelabscheider. So kann als Partikelabscheider beispielsweise ein Fliehkraftabscheider, insbesondere ein Zyklon, verwendet werden. Bei diesen Abscheidern lässt sich in der Regel präzise einstellen, welche Partikel mit welcher Größe abgetrennt werden sollen und welche Partikel den Abscheider noch passieren dürfen.

Besonders zeichnet sich ein erfindungsgemäßes Verfahren dadurch aus, dass in vorzugsweise regelmäßigen Zeitabständen oder kontinuierlich über mindestens einen weiteren Auslass Siliziumpartikel aus dem Reaktor ausgeschleust werden, wobei diesem mindestens einen weiteren Auslass kein solcher selektiv arbeitender Partikelabscheider vorgeschaltet ist. Entsprechend kann der mindestens eine weitere Auslass auch von Siliziumpartikeln mit Durchmessern jenseits der erwähnten Maximalpartikelgröße passiert werden.

Wie eingangs erwähnt, tritt in Wirbelschichtreaktoren zur Herstellung von Trichlorsilan häufig das Problem auf, dass sich innerhalb des Reaktors inaktive Siliziumpartikel anreichern und so die Effizienz des Reaktors herabgesetzt wird. Durch das gezielte Ausschleusen von Siliziumpartikeln, die in der Regel über den mindestens einen Einlass für die Siliziumpartikel unverzüglich durch frische Silliziumpartikel ersetzt werden, lässt sich eine solche Anreicherung von inaktiven Partikeln effizient verhindern.

Besonders bevorzugt werden die Siliziumpartikel unmittelbar dem Fluidabschnitt einer Wirbelschicht im Wirbelschichtreaktor entnommen. Auch bei der vorliegenden Erfindung werden der Wasserstoff und das Tetrachlorsilan sowie gegebenenfalls der Chlorwasserstoff bevorzugt im Bodenbereich des Wirbelschichtreaktors in den Reaktor eingeströmt. Oberhalb dieses Bodenbereiches bildet sich dann die Wirbelschicht aus. Diese weist in der Regel eine deutliche untere Grenze auf. Nach oben hin kann der Fluidabschnitt relativ deutlich begrenzt sein, insbesondere wenn es sich bei der Wirbelschicht um eine stationäre Wirbelschicht handelt. Als Fluidabschnitt einer Wirbelschicht wird dann der Abschnitt zwischen der oberen und der unteren Grenze bezeichnet.

Handelt es sich bei der Wirbelschicht hingegen um eine zirkulierende Wirbelschicht, so besitzt diese aufgrund der größeren Strömungsgeschwindigkeiten des Wasserstoffs und des Siliziumtetrachlorids sowie gegebenenfalls des Chlorwasserstoffs häufig keine deutliche obere Grenze mehr.

Die ausgeschleusten Siliziumpartikel werden in besonders bevorzugten Ausführungsformen des erfindungsgemäßen Verfahrens in einen zweiten Reaktor überführt, bei dem es sich besonders bevorzugt um einen zweiten Wirbelschichtreaktor handelt. Dort werden sie wiederum mit Tetrachlorsilan und Wasserstoff sowie gegebenenfalls mit Chlorwasserstoff zu einem trichlorsilanhaltigen Produktgasstrom umgesetzt. Im Gegensatz zu Siliziumpartikeln, die über den Auslass mit dem Partikelabscheider aus dem Reaktor ausgetragen werden, werden die gezielt über den mindestens einen weiteren Auslass ausgeschleusten Partikel somit weiterverwertet. Dies trägt natürlich positiv zur Gesamtausbeute des erfindungsgemäßen Verfahrens bei.

Der im zweiten Reaktor entstehende trichlorsilanhaltige Produktgasstrom kann grundsätzlich völlig separat von dem im ersten Reaktor entstehenden Produktgasstrom aufgereinigt und weiterverarbeitet werden. Besonders bevorzugt ist es jedoch, wenn der trichlorsilanhaltige Produktgasstrom aus dem zweiten Reaktor in den vorgeschalteten (ersten) Wirbelschichtreaktor rücküberführt wird. Dies ermöglicht es nämlich, den zweiten Reaktor aus baulicher Sicht sehr einfach zu halten. Es werden so nämlich beispielsweise keine separaten Partikelabscheider im zweiten Reaktor benötigt. Stattdessen kann der trichlorsilanhaltige Produktgasstrom aus dem zweiten Reaktor mit dem trichlorsilanhaltigen Produktgasstrom aus dem vorgeschalteten Wirbelschichtreaktor vereinigt werden. Die vereinigten Produktgasströme passieren dann den mindestens einen Partikelabscheider im ersten Wirbelschichtreaktor.

Damit sich der Anteil an inaktiven Partikeln, der aus dem ersten Wirbelschichtreaktor in den zweiten Reaktor überführt wird, in letzterem auch umsetzen lässt und sich nicht dort anreichert, ist es bevorzugt, dass die Reaktionsbedingungen, bei denen die ausgeschleusten Siliziumpartikel umgesetzt werden, sich im zweiten Reaktor von denen im vorgeschalteten Wirbelschichtreaktor unterscheiden. Dies gilt insbesondere im Hinblick auf die Reaktionsparameter Temperatur und/oder Druck. Besonders bevorzugt wird der zweite Reaktor bei höheren Temperaturen betrieben als der erste Reaktor.

Theoretisch ist es im übrigen denkbar, dem zweiten Reaktor noch einen parallelen dritten Reaktor sowie gegebenfalls noch weitere Reaktoren nachzuschalten, um wiederum einer Anreicherung von inaktiven Partikeln im zweiten Reaktor vorzubeugen. In der Praxis dürfte dies jedoch in den meisten Fällen nicht erforderlich sein.

Eine erfindungsgemäße Anlage zur Herstellung von Trichlorsilan weist einen ersten und einen zweiten Reaktor, insbesondere zwei Wirbelschichtreaktoren, auf, die sich jeweils zur Umsetzung von Siliziumpartikeln mit Tetrachlorsilan und Wasserstoff sowie gegebenenfalls mit Chlorwasserstoff zu einem trichlorsilanhaltigen Produktgasstrom eignen. Im ersten Reaktor wird ein erster trichlorsilanhaltiger Produktgasstrom gebildet, im zweiten Reaktor ein zweiter trichlorsilanhaltiger Produktgasstrom.

Der erste Reaktor weist bevorzugt zumindest die folgenden Komponenten auf:
- mindestens einen Einlass für das Tetrachlorsilan und den Wasserstoff sowie gegebenenfalls den Chlorwasserstoff,
- mindestens einen Einlass für die Siliziumpartikel,
- einen Reaktionsraum, in dem die Siliziumpartikel mit dem Tetrachlorsilan und dem Wasserstoff sowie gegebenenfalls dem Chlorwasserstoff eine Wirbelschicht ausbilden können,
- mindestens einen Auslass für den ersten trichlorsilanhaltigen Produktgasstrom, dem mindestens ein Partikelabscheider vorgeschaltet ist, der selektiv nur Siliziumpartikel bis hin zu einer bestimmten Maximalpartikelgröße passieren lässt und
- mindestens einen weiteren Auslass ohne einen solchen Partikelabscheider, über den auch Siliziumpartikel mit Größen über der Maximalpartikelgröße aus dem Reaktor ausgeschleust werden können.

Der zweite Reaktor umfasst zumindest
- mindestens einen Einlass für Siliziumpartikel,
- einen Reaktionsraum, in dem die Siliziumpartikel mit Tetrachlorsilan und Wasserstoff sowie gegebenenfalls mit Chlorwasserstoff eine Wirbelschicht ausbilden können und
- mindestens einen Auslass für den zweiten trichlorsilanhaltigen Produktgasstrom.

Die erfindungsgemäße Anlage zeichnet sich besonders dadurch aus, dass zwischen dem mindestens einen weiteren Auslass des ersten Reaktors und dem mindestens einen Einlass für Siliziumpartikel des zweiten Reaktors eine Verbindung besteht, über die die aus dem ersten Reaktor ausgeschleuste Siliziumpartikel in den zweiten Reaktor überführt werden können. Bei einer solchen Verbindung kann es sich beispielsweise um eine Rohrleitung handeln, die über ein geeignetes Verbindungsstück wie ein Ventil oder eine Klappe an den Einlass bzw. an den Auslass des jeweiligen Reaktors gekoppelt ist.

Bei dem mindestens einen Partikelabscheider, der vom ersten Wirbelschichtreaktor umfasst ist, handelt es sich bevorzugt um einen oder mehrere Zyklone. Geeignete Zyklone sind dem Fachmann grundsätzlich bekannt und müssen im Rahmen der vorliegenden Erfindung nicht ausführlich erläutert werden. Darüber hinaus kann diesbezüglich auch auf die eingangs gemachten Ausführungen zu geeigneten Zyklonen für Wirbelschichtreaktoren Bezug genommen werden.

In besonders bevorzugten Ausführungsformen besteht zwischen dem ersten und dem zweiten Reaktor neben der bereits erwähnten Verbindung mindestens eine weitere Verbindung, über die der zweite trichlorsilanhaltige Produktgasstrom in den ersten Reaktor geleitet werden kann. In einer Ausführungsform mit diesen beiden Verbindungen ist der Reaktionsraum des zweiten Reaktors somit dem Reaktionsraum des ersten Reaktors "parallel geschaltet". Das aus dem ersten Reaktor ausgeschleuste Silizium wird im Reaktionsraum des zweiten Reaktors mit Siliziumtetrachlorid und Wasserstoff sowie gegebenefalls mit Chlorwasserstoff umgesetzt, das dabei entstehende Trichlorsilan wird dann wieder in den ersten Reaktor überführt, womit der Kreislauf geschlossen ist.

Weitere Merkmale der Erfindung ergeben sich aus der nachfolgenden Beschreibung einer bevorzugten Ausführungsform der erfindungsgemäßen Anlage in Verbindung mit den Unteransprüchen. Hierbei können einzelne Merkmale jeweils für sich oder zu mehreren in Kombination miteinander bei einer Ausführungsform der Erfindung verwirklicht sein. Die beschriebenen bevorzugten Ausführungsformen dienen lediglich zur Erläuterung und zum besseren Verständnis der Erfindung und sind in keiner Weise einschränkend zu verstehen.

### Figurenbeschreibung:

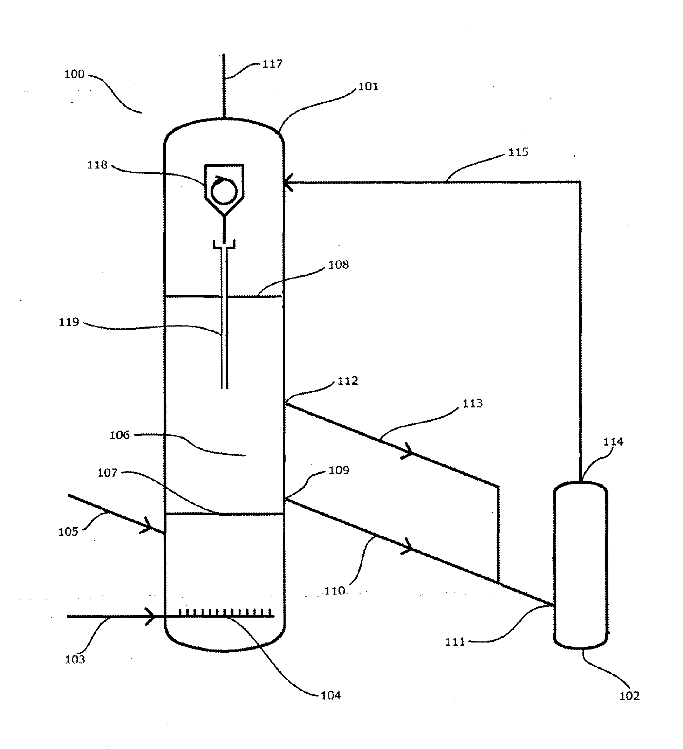

Fig. 1 zeigt schematisch den Aufbau einer bevorzugten Ausführungsform einer erfindungsgemäßen Anlage mit einem ersten Wirbelschichtreaktor und einem zweiten Wirbelschichtreaktor.

Die dargestellte bevorzugte Ausführungsform einer erfindungsgemäßen Anlage **100** umfaßt einen ersten Wirbelschichtreaktor **101** und einen zweiten Wirbelschichtreaktor **102.**

Der erste Wirbelschichtreaktor **101** weist im Bodenbereich einen Einlass **103** auf, über den Wasserstoff und gasförmiges Siliziumtetrachlorid sowie gegebenenfalls Chlorwasserstoff in den Reaktor eingeleitet werden kann. Innerhalb des Reaktors **101** befindet sich der Verteiler **104,** der es ermöglicht, einen gleichmäßig verteilten Gasstrom innerhalb des Reaktors zu erzeugen. Über den Einlass **105** kann das umzusetzende metallurgische Silizium in den Reaktor **101** eingeführt werden. Dieses bildet, verursacht durch das aufströmende Dampf-Gas-Gemisch aus Wasserstoff und Siliziumtetrachlorid bzw. ggf. auch Chlorwasserstoff im Reaktionsraum **106** des Wirbelschichtreaktors **101** eine Wirbelschicht aus. Bei der Wirbelschicht handelt es sich bevorzugt um eine stationäre Wirbelschicht, also eine Wirbelschicht, die sowohl nach oben als auch nach unten eine relativ deutliche Grenze aufweist. Die untere Begrenzung ist durch die Markierung **107** angedeutet, die obere Begrenzung durch die Markierung **108.** Zwischen den beiden Markierungen befindet sich der sogenannte Fluidabschnitt der Wirbelschicht. Aus diesem können über den Auslass **109** Siliziumpartikel aus dem Wirbelschichtreaktor **101** ausgeschleust werden und über die Verbindungsleitung **110** und den Einlass **111** in den Wirbelschichtreaktor **102** überführt werden. Dargestellt ist des weiteren noch der Auslass **112** sowie die Verbindungsleitung **113.** Über diese ist es möglich, der Wirbelschicht Siliziumpartikel aus einem höher gelegenen Abschnitt des Fluidabschnitts zu entnehmen. Grundsätzlich kann der Reaktor **101** auch mehr als zwei solcher Ausschleusungsmöglichkeiten aufweisen.

Im Wirbelschichtreaktor **102** können die ausgeschleusten Siliziumpartikel wiederum mit Wasserstoff und Siliziumtetrachlorid sowie gegebenenfalls mit Chlorwasserstoff eine Wirbelschicht bilden (der Wirbelschichtreaktor **102** kann zu diesem Zweck eigene Einlassmöglichkeiten für Wasserstoff, Siliziumtetrachlorid und Chlorwasserstoff aufweisen). Das dabei entstehende trichlorsilanhaltige Reaktionsgemisch kann über den Auslass **114** und die Verbindungsleitung **115** in den Wirbelschichtreaktor 101 rücküberführt werden. Vorzugsweise wird das Gemisch oberhalb der Obergrenze **108** der Wirbelschicht in den Reaktor **101** eingeleitet. Dort kann es sich mit dem im Reaktor **101** entstehenden trichlorsilanhaltigen Produktgemisch vermischen.

Über den Auslass **116** und die Ableitung **117** kann das vereinigte trichlorsilanhaltige Produktgemisch aus dem Reaktor abgeleitet und seiner weiteren Verwendung zugeführt werden. Dem Auslass **116** vorgeschaltet ist der Partikelabscheider **118.** Dieser lässt lediglich Siliziumpartikel mit einer bestimmten Maximalpartikelgröße passieren. Die übrigen Partikel werden innerhalb des Abscheiders **118** abgetrennt und über den Partikel-Fallauslass **119** in die Wirbelschicht rückgeführt.

## Patentansprüche

1. Verfahren zur Herstellung von Trichlorsilan, bei dem Siliziumpartikel mit Tetrachlorsilan und Wasserstoff und gegebenenfalls mit Chlorwasserstoff in einem Wirbelschichtreaktor (101) zu einem trichlorsilanhaltigen Produktgasstrom umgesetzt werden, der Wirbelschichtreaktor (101) mit mindestens einem Einlass (103) für das Tetrachlorsilan und den Wasserstoff sowie gegebenfalls den Chlorwasserstoff, mindestens einem Einlass (105) für die Siliziumpartikel, die mit dem Tetrachlorsilan und dem Wasserstoff eine Wirbelschicht ausbilden, und mindestens einem Auslass (117) für den trichlorsilanhaltigen Produktgasstrom, dem mindestens ein Partikelabscheider (118) vorgeschaltet ist, der selektiv nur Siliziumpartikel bis hin zu einer bestimmten Maximalpartikelgröße passieren lässt, **dadurch gekennzeichnet, dass** in vorzugsweise regelmäßigen Zeitabständen oder kontinuierlich über mindestens einen weiteren Auslass (109; 112) ohne einen solchen Partikelabscheider (118) Siliziumpartikel aus dem Reaktor (101) ausgeschleust werden.

2. Verfahren nach Anspruch 1, **dadurch gekennzeichnet, dass** die Siliziumpartikel unmittelbar dem Fluidabschnitt der Wirbelschicht entnommen werden.

3. Verfahren nach einem der Ansprüche 1 oder 2, **dadurch gekennzeichnet, dass** die ausgeschleusten Siliziumpartikel in einen zweiten Reaktor (102), insbesondere in einen zweiten Wirbelschichtreaktor, überführt werden, wo sie mit Tetrachlorsilan und Wasserstoff und gegebenenfalls mit Chlorwasserstoff zu einem zweiten trichlorsilanhaltigen Produktgasstrom umgesetzt werden.

4. Verfahren nach Anspruch 3, **dadurch gekennzeichnet, dass** der zweite trichlorsilanhaltige Produktgasstrom in den vorgeschalteten Wirbelschichtreaktor (101) mit dem mindestens einen weiteren Auslass ohne Partikelabscheider (109; 112) überführt wird.

5. Verfahren nach einem der Ansprüche 2 bis 4, **dadurch gekennzeichnet, dass** sich die Reaktionsbedingungen im zweiten Reaktor (102), insbesondere Temperatur und/oder Druck, bei denen die ausgeschleusten Siliziumpartikel umgesetzt werden, von denen im vorgeschalteten Wirbelschichtreaktor (101) mit dem mindestens einen weiteren Auslass ohne Partikelabscheider (109; 112) unterscheiden.

6. Anlage (100) zur Herstellung von Trichlorsilan, insbesondere zur Durchführung eines Verfahrens nach einem der vorhergehenden Ansprüche, umfassend einen ersten als Wirbelschichtreaktor ausgebildeten Reaktor (101) zur Umsetzung von Siliziumpartikeln mit Tetrachlorsilan und Wasserstoff und gegebenenfalls mit Chlorwasserstoff zu einem ersten trichlorsilanhaltigen Produktgasstrom und einen zweiten, insbesondere als Wirbelschichtreaktor ausgebildeten Reaktor (102) zur Umsetzung von Siliziumpartikeln mit Tetrachlorsilan und Wasserstoff und gegebenenfalls mit Chlorwasserstoff zu einem zweiten trichlorsilanhaltigen Produktgasstrom, der erste Reaktor (101) mit
• mindestens einem Einlass (103) für das Tetrachlorsilan und den Wasserstoff sowie gegebenenfalls den Chlorwasserstoff,
• mindestens einem Einlass (105) für die Siliziumpartikel,
• einem Reaktionsraum (106), in dem die Siliziumpartikel mit dem Tetrachlorsilan und dem Wasserstoff eine Wirbelschicht ausbilden können,
• mindestens einem Auslass (117) für den ersten trichlorsilanhaltigen Produktgasstrom, dem mindestens ein Partikelab scheider (118) vorgeschaltet ist, der selektiv nur Siliziumpartikel bis hin zu einer bestimmten Maximalpartikelgröße passieren lässt und
• mindestens einem weiteren Auslass (109; 112) ohne einen solchen Partikelabscheider, über den auch Siliziumpartikel mit Größen über der Maximalpartikelgröße aus dem Reaktor (101) ausgeschleust werden können,
der zweite Reaktor (102) mit
• mindestens einem Einlass (111) für Siliziumpartikel,
• einem Reaktionsraum, in dem die Siliziumpartikel mit Tetrachlorsilan und Wasserstoff eine Wirbelschicht ausbilden können und
• mindestens einem Auslass (114) für den zweiten trichlorsilanhaltigen Produktgasstrom,
wobei zwischen dem mindestens einen weiteren Auslass (109; 112) des ersten Reaktors (101) und dem mindestens einen Einlass (111) für Siliziumpartikel des zweiten Reaktors (102) eine Verbindung (110) besteht, über die die aus dem ersten Reaktor (101) ausgeschleusten Siliziumpartikel in den zweiten Reaktor (102) überführt werden können.

7. Anlage nach Anspruch 6, **dadurch gekennzeichnet, dass** es sich bei dem mindestens einen Partikelabscheider (118) um einen oder mehrere Zyklone handelt.

8. Anlage nach Anspruch 6 oder 7, **dadurch gekennzeichnet, dass** zwischen dem ersten (101) und dem zweiten Reaktor (102) mindestens eine weitere Verbindung (115) besteht, über die der zweite trichlorsilanhaltige Produktgasstrom in den ersten Reaktor (101) geleitet werden kann.

## Claims

1. Process for preparing trichlorosilane, in which silicon particles are reacted with tetrachlorosilane and hydrogen and optionally with hydrogen chloride in a fluidized-bed reactor (101) to form a trichlorosilane-containing product gas stream, where the fluidized-bed reactor (101) is provided with at least one inlet (103) for the tetrachlorosilane and the hydrogen and if appropriate the hydrogen chloride, at least one inlet (105) for the silicon particles which with the tetrachlorosilane and the hydrogen form a fluidized bed, and at least one outlet (117) for the trichlorosilane-containing product gas stream which is preceded by at least one particle separator (118) which selectively allows only silicon particles up to a certain maximum particle size to pass through, **characterized in that** silicon particles are discharged from the reactor (101) at preferably regular time intervals or continuously via at least one further outlet (109; 112) without such a particle separator (118).

2. Process according to Claim 1, **characterized in that** the silicon particles are taken directly from the fluid section of the fluidized bed.

3. Process according to either Claim 1 or 2, **characterized in that** the discharged silicon particles are transferred to a second reactor (102), in particular to a second fluidized-bed reactor, where they are reacted with tetrachlorosilane and hydrogen and optionally with hydrogen chloride to form a second trichlorosilane-containing product gas stream.

4. Process according to Claim 3, **characterized in that** the second trichlorosilane-containing product gas stream is transferred to the upstream fluidized-bed reactor (101) having the at least one further outlet without particle separator (109; 112).

5. Process according to any of Claims 2 to 4, **characterized in that** the reaction conditions in the second reactor (102), in particular temperature and/or pressure, under which the discharged silicon particles are reacted, differ from those in the upstream fluidized-bed reactor (101) having the at least one further outlet without particle separator (109; 112).

6. System (100) for preparing trichlorosilane, in particular for carrying out a process according to any of the preceding claims, comprising a first reactor (101) configured as a fluidized-bed reactor for reacting silicon particles with tetrachlorosilane and hydrogen and if appropriate with hydrogen chloride to give a first trichlorosilane-containing product gas stream and a second reactor (102), in particular a reactor configured as a fluidized-bed reactor, for the reaction of silicon particles with tetrachlorosilane and hydrogen and if appropriate with hydrogen chloride to give a second trichlorosilane-containing product gas stream, the first reactor (101) being provided with
• at least one inlet (103) for the tetrachlorosilane and the hydrogen and if appropriate the hydrogen chloride,
• at least one inlet (105) for the silicon particles,
• a reaction space (106) in which the silicon particles can form a fluidized bed with the tetrachlorosilane and the hydrogen,
• at least one outlet (117) for the first trichlorosilane-containing product gas stream which is preceded by at least one particle separator (118) which selectively allows only silicon particles up to a certain maximum particle size to pass through, and
• at least one further outlet (109; 112) without such a particle separator via which silicon particles having sizes above the maximum particle size can also be discharged from the reactor (101),
the second reactor (102) being provided with
• at least one inlet (111) for silicon particles,
• a reaction space in which the silicon particles can form a fluidized bed with tetrachlorosilane and hydrogen, and
• at least one outlet (114) for the second trichlorosilane-containing product gas stream,
wherein there is a connection (110) between the at least one further outlet (109; 112) of the first reactor (101) and the at least one inlet (111) for silicon particles of the second reactor (102), via which connection the silicon particles discharged from the first reactor (101) can be transferred into the second reactor (102).

7. System according to Claim 6, **characterized in that** the at least one particle separator (118) is one or more cyclones.

8. System according to Claim 6 or 7, **characterized in that** there is at least one further connection (115) between the first reactor (101) and the second reactor (102), via which connection the second trichlorosilane-containing product gas stream can be introduced into the first reactor (101).

## Revendications

1. Procédé de fabrication de trichlorosilane dans lequel des particules de silicium sont amenées à réagir avec du tétrachlorosilane et de l'hydrogène ainsi qu'éventuellement du chlorure d'hydrogène pour former un écoulement de produit gazeux contenant du trichlorosilane dans un réacteur (101) à lit fluidisé,
le réacteur (101) à lit fluidisé présentant au moins une admission (103) de tétrachlorosilane et d'hydrogène ainsi qu'éventuellement de chlorure d'hydrogène, au moins une admission (105) de particules de silicium qui forme un lit fluidisé avec le tétrachlorosilane et l'hydrogène et au moins une sortie (117) pour l'écoulement de produit gazeux contenant du trichlorosilane, la sortie étant précédée par au moins un séparateur (118) de particules qui laisse passer sélectivement uniquement les particules de silicium jusqu'à une taille maximale définie de particules, **caractérisé en ce que**
à des intervalles de temps de préférence réguliers ou en continu, des particules de silicium sont extraites du réacteur (101) par au moins une autre sortie (109; 112) ne présentant pas un tel séparateur (118) de particules.

2. Procédé selon la revendication 1, **caractérisé en ce que** les particules de silicium sont prélevées directement dans la partie fluide du lit fluidisé.

3. Procédé selon l'une des revendications 1 ou 2, **caractérisé en ce que** les particules de silicium extraites sont transférées dans un deuxième réacteur (102) et en particulier dans un deuxième réacteur à lit fluidisé dans lequel elles sont converties en un deuxième écoulement de produit gazeux contenant du trichlorosilane avec du tétrachlorosilane, de l'hydrogène et éventuellement du chlorure d'hydrogène.

4. Procédé selon la revendication 3, **caractérisé en ce que** le deuxième écoulement de produit gazeux contenant du trichlorosilane est transféré dans le réacteur (101) à lit fluidisé amont qui présente la ou les autres sorties sans séparateur (109; 112) de particules.

5. Procédé selon l'une des revendications 2 à 4, **caractérisé en ce que** les conditions de réaction dans le deuxième réacteur (102), en particulier la température et/ou la pression auxquelles les particules de silicium extraites sont converties, sont différentes de celles qui règnent dans le réacteur amont (101) à lit fluidisé qui présente la ou les autres sorties sans séparateur (109; 112) de particules.

6. Installation (100) de fabrication de trichlorosilane, en particulier destinée à exécuter un procédé selon l'une des revendications précédentes, et comprenant un premier réacteur (101) configuré comme réacteur à lit fluidisé et servant à faire réagir des particules de silicium avec du tétrachlorosilane, de l'hydrogène et éventuellement du chlorure d'hydrogène pour former un premier écoulement de produit gazeux contenant du trichlorosilane et un deuxième réacteur (102), en particulier configuré comme réacteur à lit fluidisé, dans lequel des particules de silicium réagissent avec du tétrachlorosilane, de l'hydrogène et éventuellement du chlorure d'hydrogène pour former un deuxième écoulement de produit gazeux contenant du trichlorosilane,
le premier réacteur (101) présentant :
au moins une admission (103) de tétrachlorosilane, d'hydrogène et éventuellement de chlorure d'hydrogène,
au moins une admission (105) de particules de silicium,
un espace de réaction (106) dans lequel les particules de silicium peuvent former un lit fluidisé avec le tétrachlorosilane et l'hydrogène,
au moins une sortie (117) pour le premier écoulement de produit gazeux contenant du trichlorosilane, précédée par au moins un séparateur (118) de particules qui laisse passer sélectivement uniquement les particules de silicium jusqu'à une taille maximale de particules définie et
au moins une deuxième sortie (109; 112) qui ne présente pas un tel séparateur de particules et par laquelle des particules de silicium dont la taille est supérieure à la taille maximale de particules peuvent également être extraites du réacteur (101),
le deuxième réacteur (102) présentant :
au moins une admission (111) de particules de silicium,
un espace de réaction dans lequel les particules de silicium peuvent former un lit fluidisé avec le tétrachlorosilane et l'hydrogène et
au moins une sortie (114) pour le deuxième écoulement de produit gazeux contenant du trichlorosilane,
une liaison (110) par laquelle les particules de silicium extraites du premier réacteur (101) peuvent être transférées dans le deuxième réacteur (102) étant prévue entre la ou les autres sorties (109; 112) du premier réacteur (101) et la ou les entrées (111) de particules de silicium du deuxième réacteur (102).

7. Installation selon la revendication 6, **caractérisée en ce que** le ou les séparateurs (118) de particules sont un ou plusieurs cyclones.

8. Installation selon les revendications 6 ou 7, **caractérisée en ce qu'**au moins une autre liaison (115) par laquelle le deuxième écoulement de produit gazeux contenant du trichlorosilane peut être amené dans le premier réacteur (101) est prévue entre le premier réacteur (101) et le deuxième réacteur (102).
